# EUROPEAN PATENT APPLICATION

(11) **EP 3 451 602 A1**
(43) Date of publication of application: **06.03.2019**
(21) Application number: 16900008.0
(22) Date of filing: 16.06.2016
(51) Int. Cl.: H04L 29/06, H04L 29/08

(54) **REGISTRATION MANAGEMENT METHOD AND DEVICE**

(30) Priority: 25.04.2016 CN 201610260402
(71) Applicant: ZTE Corporation, Shenzhen, Guangdong 518057 (CN)
(72) Inventor: YANG, Kun, Shenzhen Guangdong 518057 (CN)
(74) Representative: Studio Torta S.p.A.
(86) International application number: PCT/CN2016/086048
(87) International publication number: WO 2017/185498

(57) **Abstract**

Disclosed herein is a registration management method, applicable to gateway proxy. The method comprises: upon receiving a registration request sent by a user terminal, creating a registration resource for the user terminal, and establishing an attribute of the registration resource; sending to a remote server a request message for creating an advertisement resource, wherein the request message carries information of the registration resource created for the user terminal; receiving an advertisement resource creation response message sent by the remote server, and upon acquiring, from the advertisement resource creation response message, information of an advertisement resource created by the remote server for the user terminal, updating, according to the acquired information of the advertisement resource, the attribute of the registration resource; and sending to the user terminal a registration response message carrying information of the registration resource created for the user terminal.

## Description

### TECHNICAL FIELD

The present application relates to, but is not limited to, the field of communications, and more particularly, to a registration management method and apparatus.

### BACKGROUND

In an Alljoyn system, a user may use his/her Alljoyn device in a proximal network (such as a home network) to enjoy Alljoyn services and seamlessly experience the Alljoyn services when leaving the proximal network (near-end network) through an Alljoyn Gateway Agent (GA). To this end, the user sets up a list of remotely accessible services in the proximal network, including devices, Applications (Apps), and interfaces, and then the user remotely accesses the Alljoyn services through a Cloud Server (CS).

A control App on a Mobile Device (MD) enables the user to configure a remote configuration file in the proximal network, and also to control the device to receive notifications after leaving the proximal network, as the way in proximal network.

A third-party protocol for connecting GA and CS may be specified by a service provider. Components that implement remote access in GA include a gateway management App and a connector App.

The gateway management App implements that the control APP manages the remote configuration file and provides the remote configuration file to the connector App.

The connector App provides connection between the AllJoyn device and the CS, and provides a protocol conversion between an AllJoyn protocol and the third-party protocol in the meanwhile.

The control App finds the gateway management App by an announcement-based way, while the gateway management App communicates with the connector App through the same AllJoyn router preset in the GA.

When the MD locally controls the device in the proximal network through the GA in the proximal network, the MD needs to register in the GA. When the MD leaves the proximal network and remotely controls the device in the proximal network through Internet, the MD needs to register in the CS.

To implement local control and remote control, the mobile device needs to register with the Gateway Agent (GA) and the Cloud Server (CS) respectively. The two registration processes increase signaling overhead.

### SUMMARY

The following is an overview of the subject matter detailed herein. This summary is not intended to limit the scope of protection of the claims.

There is provided a registration management method and apparatus herein, which enable the user terminal to remotely control devices in the proximal network without registering with the remote server after leaving the proximal network, thus saving signaling overhead for registering with the remote server and improving the user experience.

An embodiment of the present disclosure provides a registration management method, applied to a gateway agent, including:
after receiving a registration request sent by a user terminal, creating a registration resource for the user terminal, and establishing an attribute of the registration resource;
sending an announcement resource creation request message to a remote server, the announcement resource creation request message carrying information of the registration resource created for the user terminal; receiving an announcement resource creation response message sent by the remote server, and after acquiring information of an announcement resource created by the remote server for the user terminal from the announcement resource creation response message, updating the attribute of the registration resource according to the acquired information of the announcement resource; and
sending a registration response message to the user terminal, the registration response message carrying the information of the registration resource created for the user terminal.

Optionally, the gateway agent is a gateway agent capable of providing an AllJoyn service to a user; and
the user terminal is a user terminal providing the AllJoyn service to the user through an AllJoyn control application (App).

Optionally, the registration request sent by the user terminal carries at least one of following information: an application identity of a control App initiating the registration request, authentication information of the control App, and an identity or a uniform resource identifier (URI) of a remote server contracted with the control App.

Optionally, an attribute of the registration resource created by the gateway agent for the user terminal includes at least one of following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

Optionally, the sending the announcement resource creation request message to the remote server includes:
triggering, by a gateway management App, a connector App to send the announcement resource creation request message to the remote server according to the identity or the URI of the remote server needing to be announced;
wherein, the gateway agent includes: the gateway management App and the connector App; and the information of the registration resource carried in the announcement resource creation request message sent by the gateway agent includes: attribute information of the registration resource.

Optionally, the updating the attribute of the registration resource according to the acquired information of the announcement resource includes:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal includes: attribute information of the registration resource.

An embodiment of the present disclosure provides a registration management method, applied to a remote server, including:
after receiving an announcement resource creation request message sent by a gateway agent, acquiring information of a registration resource created by the gateway agent for a user terminal from the announcement resource creation request message; and
authenticating the user terminal according to the acquired information of the registration resource, creating an announcement resource for the user terminal when the user terminal passes the authentication, establishing an attribute of the announcement resource, and sending an announcement resource creation response message to the gateway agent, the announcement resource creation response message carrying information of the announcement resource.

Optionally, the gateway agent is a gateway agent capable of providing an AllJoyn service to a user, including a gateway management application App and a connector App; and
the user terminal is a user terminal providing the AllJoyn service to the user through an AllJoyn control application (App).

Optionally, the acquired information of the registration resource created by the gateway agent for the user terminal from the announcement resource creation request message includes: attribute information of the registration resource; and
the attribute information of the registration resource includes at least one of following information: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

Optionally, the authenticating the user terminal according to the acquired information of the registration resource includes:
determining a control App that initiates the registration request in the user terminal according to the acquired information of the initiator attribute of the registration resource; and
authenticating the control App according to the acquired information of the authentication attribute of the registration resource.

Optionally, the attribute of the announcement resource created by the remote server for the user terminal includes at least one of following attributes: a registration initiator attribute, an announcement initiator attribute, and an authentication result attribute;
wherein, a value of the registration initiator attribute is adapted to be an application identity or a URI of a control App that initiates a registration request in the user terminal; and
a value of the announcement initiator attribute is adapted to be an application identity or a URI of the connector App of the gateway agent; and
a value of the authentication result attribute is adapted to be an authentication result of the control App that initiates the registration request in the user terminal by the remote server, the authentication result being indication information indicating success or failure of authentication.

Optionally, the information of the announcement resource carried in the announcement resource creation response message includes: attribute information of the announcement resource.

Optionally, the method further includes:
after receiving a remote access request message sent by the user terminal, acquiring at least one of following information from the remote access request message: an application identity or a URI of the connector App of the gateway agent, a URI of the announcement resource, and an operation instruction for remote control;
inquiring the corresponding attribute information of the announcement resource locally according to the URI information of the announcement resource carried in the remote access request message, if the corresponding attribute information of the announcement resource is inquired, determining whether a value of the authentication result attribute of the announcement resource passes the authentication, if the value of the authentication result attribute passes the authentication, determining whether the application identity or the URI of the connector App carried in the remote access request message is consistent with a value of the announcement initiator attribute of the inquired announcement resource, if the two values are consistent, determining that a verification is passed, forwarding the remote access request message to the gateway agent, and after receiving a remote access response of the gateway agent, feeding back the remote access response to the user terminal; if the two values are not consistent, feeding back the remote access response to the user terminal to indicate that the remote access request is failed; and if the value of the authentication result attribute is that the authentication is not passed, feeding back the remote access response to the user terminal to indicate that the remote access request is failed and a cause of failure is "not registered".

An embodiment of the present disclosure provides a registration management method, applied to a user terminal, including:
sending a registration request to a gateway agent; and
after receiving a registration response message sent by the gateway agent, acquiring information of a registration resource created by the gateway agent for a user terminal from the registration response message.

Optionally, the gateway agent is a gateway agent capable of providing an AllJoyn service to a user; and
the user terminal is a user terminal providing the AllJoyn service to the user through an AllJoyn control application (App).

Optionally, the registration request sent by the user terminal carries at least one of following information: an application identity of a control App initiating the registration request, authentication information of the control App, and an identity or a uniform resource identifier URI of a remote server contracted with the control App.

Optionally, the information of the registration resource carried in the registration response message sent by the gateway agent includes: attribute information of the registration resource; and
the attribute information of the registration resource includes at least one of following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

Optionally, the method further includes:
sending a remote access request message to the remote server according to the acquired information of the announcement resource, the remote access request message carrying at least one of following information: an application identity or a URI of the connector App of the gateway agent, a URI of the announcement resource, and an operation instruction for remote control.

The present disclosure provides a registration management apparatus, applied to a gateway agent, including:
a registration request receiving and processing module configured to, after receiving a registration request sent by a user terminal, create a registration resource for the user terminal, and establish an attribute of the registration resource;
an announcement requesting and processing module configured to send an announcement resource creation request message to a remote server, the announcement resource creation request message carrying information of the registration resource created for the user terminal; receive an announcement resource creation response message sent by the remote server, and after acquiring information of an announcement resource created by the remote server for the user terminal from the announcement resource creation response message, update the attribute of the registration resource according to the acquired information of the announcement resource; and
a registration response module configured to send a registration response message to the user terminal, the registration response message carrying the information of the registration resource created for the user terminal.

Optionally, the gateway agent is a gateway agent capable of providing an AllJoyn service to a user; and
the user terminal is a user terminal providing the AllJoyn service to the user through an AllJoyn control application (App).

Optionally, the registration request sent by the user terminal carries at least one of following information: an application identity of a control App initiating the registration request, authentication information of the control App, and an identity or a uniform resource identifier (URI) of a remote server contracted with the control App.

Optionally, an attribute of the registration resource created by the gateway agent for the user terminal includes at least one of following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

Optionally, the announcement requesting and processing module is configured to send the announcement resource creation request message to the remote server through a following manner: triggering, by a gateway management App, a connector App to send the announcement resource creation request message to the remote server according to the identity or the URI of the remote server needing to be announced;
wherein, the gateway agent includes: the gateway management App and the connector App; and the information of the registration resource carried in the announcement resource creation request message sent by the gateway agent includes: attribute information of the registration resource.

Optionally, the announcement requesting and processing module is configured to update the attribute of the registration resource according to the acquired information of the announcement resource through a following manner:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal includes: attribute information of the registration resource.

The present disclosure provides a registration management apparatus, applied to a remote server, including:
an announcement request receiving module configured to, after receiving an announcement resource creation request message sent by a gateway agent, acquire information of a registration resource created by the gateway agent for a user terminal from the announcement resource creation request message; and
an announcement resource creating module configured to authenticate the user terminal according to the acquired information of the registration resource, create an announcement resource for the user terminal when the user terminal passes the authentication, establish an attribute of the announcement resource, and send an announcement resource creation response message to the gateway agent, the announcement resource creation response message carrying information of the announcement resource.

Optionally, the gateway agent is a gateway agent capable of providing an AllJoyn service to a user, including a gateway management application (App) and a connector App; and
the user terminal is a user terminal providing the AllJoyn service to the user through an AllJoyn control application (App).

Optionally, the acquired information of the registration resource created by the gateway agent for the user terminal from the announcement resource creation request message includes: attribute information of the registration resource; and
the attribute information of the registration resource includes at least one of following information: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

Optionally, the announcement resource creating module is configured to authenticate the user terminal according to the acquired information of the registration resource through a following manner:
determining a control App that initiates the registration request in the user terminal according to the acquired information of the initiator attribute of the registration resource; and
authenticating the control App according to the acquired information of the authentication attribute of the registration resource.

Optionally, the attribute of the announcement resource created by the remote server for the user terminal includes at least one of following attributes: a registration initiator attribute, an announcement initiator attribute, and an authentication result attribute;
wherein, a value of the registration initiator attribute is adapted to be an application identity or a URI of a control App that initiates a registration request in the user terminal;
a value of the announcement initiator attribute is adapted to be an application identity or a URI of the connector App of the gateway agent; and
a value of the authentication result attribute is adapted to be an authentication result of the control App that initiates the registration request in the user terminal by the remote server, which is namely indication information indicating success or failure of authentication.

Optionally, the information of the announcement resource carried in the announcement resource creation response message includes: attribute information of the announcement resource.

Optionally, the apparatus further includes:
a remote service module configured to, after receiving a remote access request message sent by the user terminal, acquire at least one of following information from the remote access request message: an application identity or a URI of the connector App of the gateway agent, a URI of the announcement resource, and an operation instruction for remote control;
inquire the corresponding attribute information of the announcement resource locally according to the URI information of the announcement resource carried in the remote access request message, if the corresponding attribute information of the announcement resource is inquired, determine whether a value of the authentication result attribute of the announcement resource passes the authentication, if the value of the authentication result attribute passes the authentication, determine whether the application identity or the URI of the connector App carried in the remote access request message is consistent with a value of the announcement initiator attribute of the inquired announcement resource, if the two values are consistent, determine that a verification is passed, forward the remote access request message to the gateway agent, and after receiving a remote access response of the gateway agent, feed back the remote access response to the user terminal; if the two values are not consistent, feed back the remote access response to the user terminal to indicate that the remote access request is failed; and if the value of the authentication result attribute is that the authentication is not passed, feed back the remote access response to the user terminal to indicate that the remote access request is failed and a cause of failure is "not registered".

The present disclosure provides a registration management apparatus, applied to a user terminal, including:
a registration request module configured to send a registration request to a gateway agent; and
a registration response receiving module configured to, after receiving the registration response message sent by the gateway agent, acquire information of a registration resource created by the gateway agent for a user terminal from the registration response message.

Optionally, the gateway agent is a gateway agent capable of providing an AllJoyn service to a user; and
the user terminal is a user terminal providing the AllJoyn service to the user through an AllJoyn control application (App).

Optionally, the registration request sent by the user terminal carries at least one of following information: an application identity of a control App initiating the registration request, authentication information of the control App, and an identity or a uniform resource identifier URI of a remote server contracted with the control App.

Optionally, the information of the registration resource carried in the registration response message sent by the gateway agent includes: attribute information of the registration resource; and
the attribute information of the registration resource includes at least one of following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

Optionally, the apparatus further includes:
a remote access module configured to send a remote access request message to the remote server according to the acquired information of the announcement resource, the request message carrying at least one of following information: an application identity or a URI of the connector App of the gateway agent, a URI of the announcement resource, and an operation instruction for remote control.

The embodiments of the present disclosure also provide a computer readable storage medium storing a computer-executable instruction which, when being executed by a processor, implements the above-mentioned method.

Compared with the related art, in the registration management method and apparatus provided by the embodiments in the present disclosure, the gateway agent announces the registration resource and the attribute to the remote server after creating the registration resource and the attribute for the user terminal; the remote server creates the announcement resource and the attribute for the user terminal, and establishes a correlation relation between the registration resource and the announcement resource; after leaving the proximal network, the user terminal can remotely control the devices in the proximal network without registering with the remote server, thus saving the signaling overhead of registering with the remote server and improving the user experience.

Other aspects will become apparent upon reading and understanding the drawings and detailed description.

### BRIEF DESCRIPTION OF THE DRAWINGS

Fig. 1 is a schematic diagram of an AllJoyn system in the related art.
Fig. 2 is a flow chart of a registration management method (gateway agent) according to an embodiment of the present disclosure.
Fig. 3 is a flow chart of a registration management method (remote server) according to an embodiment of the present disclosure.
Fig. 4 is a flow chart of a registration management method (user terminal) according to an embodiment of the present disclosure.
Fig. 5 is a schematic diagram of a registration management apparatus (gateway agent) according to an embodiment of the present disclosure
Fig. 6 is a schematic diagram of a registration management apparatus (remote server) according to an embodiment of the present disclosure
Fig. 7 is a schematic diagram of a registration management apparatus (user terminal) according to an embodiment of the present disclosure
Fig. 8 is a schematic diagram illustrating information interaction of a registration management method according to a first example of the present disclosure.

### DETAILED DESCRIPTION

The embodiments of the present disclosure will be described in detail hereinafter with reference to the accompanying drawings. It should be noted that, in case of no conflict, the embodiments in the present application and the features in the embodiments may be arbitrarily combined with each other.

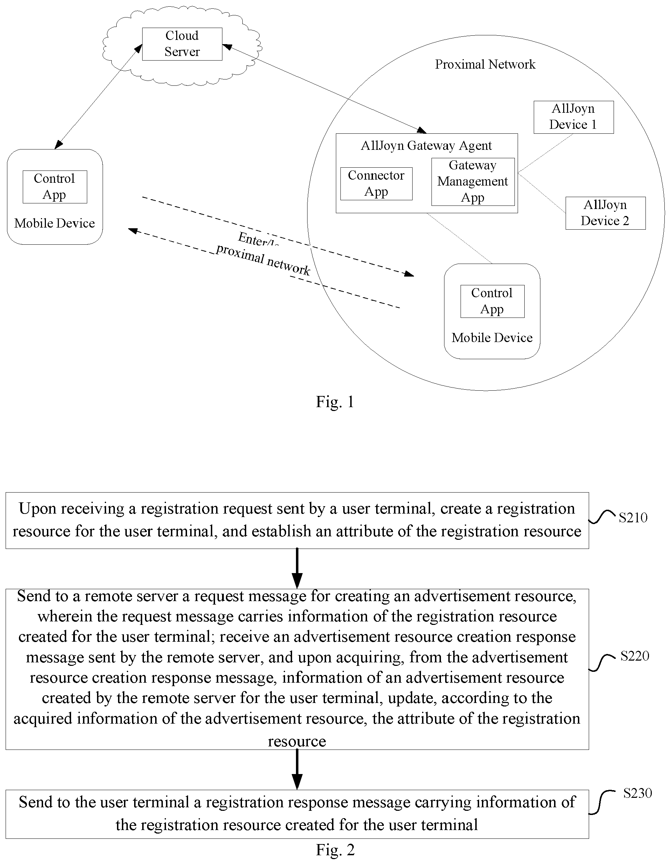

As shown in Fig. 2, an embodiment of the present disclosure provides a registration management method, applied to a gateway agent, including the following steps.

In S210, after receiving a registration request sent by a user terminal, a registration resource is created for the user terminal, and an attribute of the registration resource is established.

In S220, an announcement resource creation request message is sent to a remote server, the announcement resource creation request message carrying information of the registration resource created for the user terminal; an announcement resource creation response message sent by the remote server is received, and after acquiring information of an announcement resource created by the remote server for the user terminal from the announcement resource creation response message, the attribute of the registration resource is updated according to the acquired information of the announcement resource.

In S230: a registration response message is sent to the user terminal, the registration response message carrying the information of the registration resource created for the user terminal.

Optionally, the gateway agent is a gateway agent capable of providing an AllJoyn service to a user; and the user terminal is a user terminal providing the AllJoyn service to the user through an AllJoyn control application App.

Optionally, the user terminal includes: a mobile device.

Optionally, the remote server includes: a cloud server.

Optionally, the gateway agent includes: a gateway management App and a connector App; and
Optionally, the registration request sent by the user terminal carries at least one of the following information: an application identity of a control App initiating the registration request, authentication information of the control App, and an identity or a Uniform Resource Identifier (URI) of a remote server contracted with the control App.

Optionally, the authentication information of the control App may be: a security certificate of the control App.

Optionally, the creating the registration resource for the user terminal and the establishing the attribute of the registration resource include:
authenticating the control App initiating a registration request according to the application identity and the authentication information of the control App carried in the registration request sent by the user terminal, creating the announcement resource for the user terminal when the control App passes the authentication, and establishing the attribute of the registration resource.

Optionally, an attribute of the registration resource created by the gateway agent for the user terminal includes at least one of the following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

Optionally, the sending the announcement resource creation request message to the remote server includes:
triggering, by a gateway management App, a connector App to send the announcement resource creation request message to the remote server according to the identity or the URI of the remote server needing to be announced;
wherein, the gateway agent includes: the gateway management App and the connector App; and the information of the registration resource carried in the announcement resource creation request message sent by the gateway agent includes: attribute information of the registration resource.

Optionally, the updating the attribute of the registration resource according to the acquired information of the announcement resource includes:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal includes: attribute information of the registration resource.

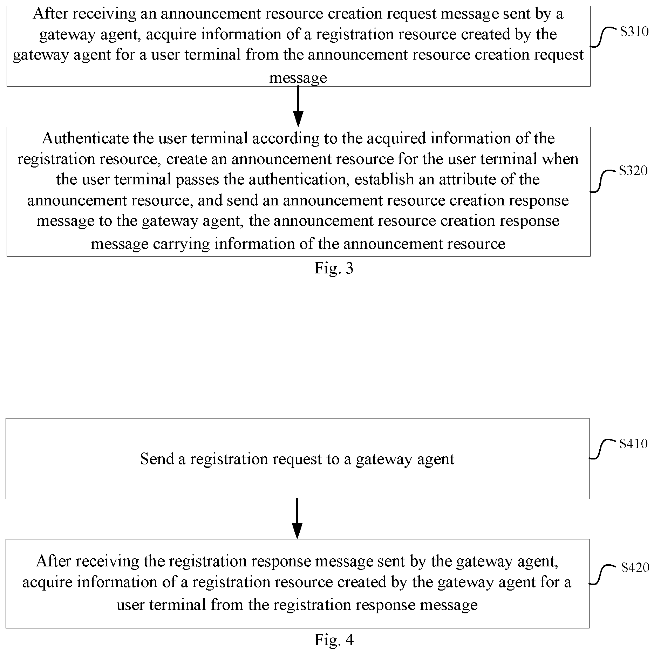

As shown in Fig. 3, an embodiment of the present disclosure provides a registration management method, applied to a remote server, including the following steps.

In S310, after receiving an announcement resource creation request message sent by a gateway agent, information of a registration resource created by the gateway agent for a user terminal is acquired from the announcement resource creation request message.

In S320, the user terminal is authenticated according to the acquired information of the registration resource, an announcement resource is created for the user terminal when the user terminal passes the authentication, an attribute of the announcement resource is established, and an announcement resource creation response message is sent to the gateway agent, the announcement resource creation response message carrying information of the announcement resource.

Optionally, the gateway agent is a gateway agent capable of providing an AllJoyn service to a user; and the user terminal is a user terminal providing the AllJoyn service to the user through an AllJoyn control application App.

Optionally, the gateway agent includes: a gateway management App and a connector App; and Optionally, the user terminal includes: a mobile device.

Optionally, the remote server includes: a cloud server.

Optionally, the acquired information of the registration resource created by the gateway agent for the user terminal from the announcement resource creation request message includes: attribute information of the registration resource; and
the attribute information of the registration resource includes at least one of the following information: an announcement URI attribute, an initiator attribute, and an authentication attribute; wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal.

Optionally, the authenticating the user terminal according to the acquired information of the registration resource includes:
determining a control App that initiates the registration request in the user terminal according to the acquired information of the initiator attribute of the registration resource; and
authenticating the control App according to the acquired information of the authentication attribute of the registration resource.

Optionally, the attribute of the announcement resource created by the remote server for the user terminal includes at least one of the following attributes: a registration initiator attribute, an announcement initiator attribute, and an authentication result attribute;
wherein, a value of the registration initiator attribute is adapted to be an application identity or a URI of a control App that initiates a registration request in the user terminal;
a value of the announcement initiator attribute is adapted to be an application identity or a URI of the connector App of the gateway agent; and
a value of the authentication result attribute is adapted to be an authentication result of the control App that initiates the registration request in the user terminal by the remote server, the authentication result being information indicating success or failure of authentication.

Optionally, the information of the announcement resource carried in the announcement resource creation response message includes: attribute information of the announcement resource.

Optionally, the method further includes:
after receiving a remote access request message sent by the user terminal, acquiring at least one of the following information from the remote access request message: an application identity or a URI of the connector App of the gateway agent, a URI of the announcement resource, and an operation instruction for remote control;
inquiring the corresponding attribute information of the announcement resource locally according to the URI information of the announcement resource carried in the remote access request message, if the corresponding attribute information of the announcement resource is inquired, determining whether a value of the authentication result attribute of the announcement resource passes the authentication, if the value of the authentication result attribute passes the authentication, determining whether the application identity or the URI of the connector App carried in the remote access request message is consistent with a value of the announcement initiator attribute of the inquired announcement resource, if the two values are consistent, determining that a verification is passed, forwarding the remote access request message to the gateway agent, and after receiving a remote access response of the gateway agent, feeding back the remote access response to the user terminal; if the two values are not consistent, feeding back the remote access response to the user terminal to indicate that the remote access request is failed; and if the value of the authentication result attribute is that the authentication is not passed, feeding back the remote access response to the user terminal to indicate that the remote access request is failed and a cause of failure is "not registered".

As shown in Fig. 4, an embodiment of the present disclosure provides a registration management method, applied to a user terminal, including the following steps.

In S410, a registration request is sent to a gateway agent.

In S420, after receiving the registration response message sent by the gateway agent, information of a registration resource created by the gateway agent for a user terminal is acquired from the registration response message.

Optionally, the gateway agent is a gateway agent capable of providing an AllJoyn service to a user; and the user terminal is a user terminal providing the AllJoyn service to the user through an AllJoyn control application App.

Optionally, the gateway agent includes: a gateway management App and a connector App.

Optionally, the user terminal includes: a mobile device.

Optionally, the remote server includes: a cloud server.

Optionally, the registration request sent by the user terminal carries at least one of the following information: an application identity of a control App initiating the registration request, authentication information of the control App, and an identity or a Uniform Resource Identifier (URI) of a remote server contracted with the control App.

Optionally, the authentication information of the control App may be: a security certificate of the control App.

Optionally, the information of the registration resource carried in the registration response message sent by the gateway agent includes: attribute information of the registration resource; and
the attribute information of the registration resource includes at least one of the following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

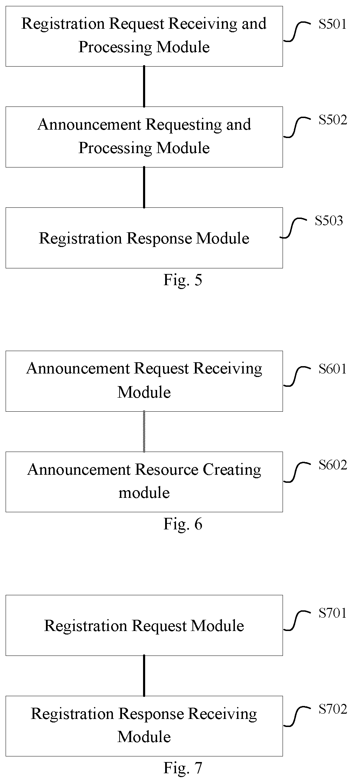

Optionally, the method further includes:
sending a remote access request message to the remote server according to the acquired information of the announcement resource, the remote access request message carrying at least one of the following information: an application identity or a URI of the connector App of the gateway agent, a URI of the announcement resource, and an operation instruction for remote control;
As shown in Fig. 5, an embodiment of the present disclosure provides a registration management apparatus, applied to a gateway agent, including: a registration request receiving and processing module 501, an announcement requesting and processing module 502, and a registration response module 503.

The registration request receiving and processing module 501 is configured to, after receiving a registration request sent by a user terminal, create a registration resource for the user terminal, and establish an attribute of the registration resource.

The announcement requesting and processing module 502 is configured to send an announcement resource creation request message to a remote server, the announcement resource creation request message carrying information of the registration resource created for the user terminal; receive an announcement resource creation response message sent by the remote server, and after acquiring information of an announcement resource created by the remote server for the user terminal from the announcement resource creation response message, update the attribute of the registration resource according to the acquired information of the announcement resource.

The registration response module 503 is configured to send a registration response message to the user terminal, the registration response message carrying the information of the registration resource created for the user terminal.

Optionally, the gateway agent is a gateway agent capable of providing an AllJoyn service to a user; and the user terminal is a user terminal providing the AllJoyn service to the user through an AllJoyn control application App.

Optionally, the user terminal includes: a mobile device.

Optionally, the remote server includes: a cloud server.

Optionally, the gateway agent includes: a gateway management App and a connector App.

Optionally, the registration request sent by the user terminal carries at least one of the following information: an application identity of a control App initiating the registration request, authentication information of the control App, and an identity or a uniform resource identifier URI of a remote server contracted with the control App.

Optionally, an attribute of the registration resource created by the gateway agent for the user terminal includes at least one of the following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal.

Optionally, the announcement requesting and processing module is configured to send the announcement resource creation request message to the remote server through a following manner: triggering, by a gateway management App, a connector App to send the announcement resource creation request message to the remote server according to the identity or the URI of the remote server needing to be announced;
wherein, the gateway agent includes: the gateway management App and the connector App; and the information of the registration resource carried in the announcement resource creation request message sent by the gateway agent includes: attribute information of the registration resource.

The announcement requesting and processing module 502 is configured to update the attribute of the registration resource according to the acquired information of the announcement resource through a following manner:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal includes: attribute information of the registration resource.

As shown in Fig. 6, an embodiment of the present disclosure provides a registration management apparatus, applied to a remote server, including: an announcement request receiving module 601, and an announcement resource creating module 602.

The announcement request receiving module 601 is configured to, after receiving an announcement resource creation request message sent by a gateway agent, acquire information of a registration resource created by the gateway agent for a user terminal from the announcement resource creation request message.

The announcement resource creating module 602 is configured to authenticate the user terminal according to the acquired information of the registration resource, create an announcement resource for the user terminal when the user terminal passes the authentication, establish an attribute of the announcement resource, and send an announcement resource creation response message to the gateway agent, the announcement resource creation response message carrying information of the announcement resource.

Optionally, the gateway agent is a gateway agent capable of providing an AllJoyn service to a user; and the user terminal is a user terminal providing the AllJoyn service to the user through an AllJoyn control application App.

Optionally, the user terminal includes: a mobile device.

Optionally, the remote server includes: a cloud server.

Optionally, the gateway agent includes: a gateway management App and a connector App.

Optionally, the acquired information of the registration resource created by the gateway agent for the user terminal from the announcement resource creation request message includes: attribute information of the registration resource; and
the attribute information of the registration resource includes at least one of the following information: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal.

The announcement resource creating module 602 is configured to authenticate the user terminal according to the acquired information of the registration resource through a following manner:
determining a control App that initiates the registration request in the user terminal according to the acquired information of the initiator attribute of the registration resource; and
authenticating the control App according to the acquired information of the authentication attribute of the registration resource.

Optionally, the attribute of the announcement resource created by the remote server for the user terminal includes at least one of the following attributes: a registration initiator attribute, an announcement initiator attribute, and an authentication result attribute;
wherein, a value of the registration initiator attribute is adapted to be an application identity or a URI of a control App that initiates a registration request in the user terminal;
a value of the announcement initiator attribute is adapted to be an application identity or a URI of the connector App of the gateway agent; and
a value of the authentication result attribute is adapted to be an authentication result of the control App that initiates the registration request in the user terminal by the remote server, the authentication result being information indicating success or failure of authentication.

Optionally, the information of the announcement resource carried in the announcement resource creation response message includes: attribute information of the announcement resource.

Optionally, the apparatus further includes:
a remote service module 603 configured to, after receiving a remote access request message sent by the user terminal, acquire at least one of the following information from the remote access request message: an application identity or a URI of the connector App of the gateway agent, a URI of the announcement resource, and an operation instruction for remote control;
inquire the corresponding attribute information of the announcement resource locally according to the URI information of the announcement resource carried in the remote access request message, if the corresponding attribute information of the announcement resource is inquired, determine whether a value of the authentication result attribute of the announcement resource passes the authentication, if the value of the authentication result attribute passes the authentication, determine whether the application identity or the URI of the connector App carried in the remote access request message is consistent with a value of the announcement initiator attribute of the inquired announcement resource, if the two values are consistent, judge that a verification is passed, forward the remote access request message to the gateway agent, and after receiving a remote access response of the gateway agent, feed back the remote access response to the user terminal; if the two values are not consistent, feed back the remote access response to the user terminal to indicate that the remote access request is failed; and if the value of the authentication result attribute is that the authentication is not passed, feed back the remote access response to the user terminal to indicate that the remote access request is failed and a cause of failure is "not registered".

As shown in Fig. 7, an embodiment of the present disclosure provides a registration management apparatus, applied to a user terminal, including: a registration request module 701, and a registration response receiving module 702.

The registration request module 701 is configured to send a registration request to a gateway agent.

The registration response receiving module 702 is configured to, after receiving the registration response message sent by the gateway agent, acquire information of a registration resource created by the gateway agent for a user terminal from the registration response message.

Optionally, the gateway agent is a gateway agent capable of providing an AllJoyn service to a user; and the user terminal is a user terminal providing the AllJoyn service to the user through an AllJoyn control application App.

Optionally, the user terminal includes: a mobile device.

Optionally, the remote server includes: a cloud server.

Optionally, the gateway agent includes: a gateway management App and a connector App.

Optionally, the registration request sent by the user terminal carries at least one of the following information: an application identity of a control App initiating the registration request, authentication information of the control App, and an identity or a uniform resource identifier URI of a remote server contracted with the control App.

Optionally, the information of the registration resource carried in the registration response message sent by the gateway agent includes: attribute information of the registration resource; and
the attribute information of the registration resource includes at least one of the following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

Optionally, the apparatus further includes:
a remote access module 703 configured to send a remote access request message to the remote server according to the acquired information of the announcement resource, the request message carrying at least one of the following information: an application identity or a URI of the connector App of the gateway agent, a URI of the announcement resource, and an operation instruction for remote control.

### First example

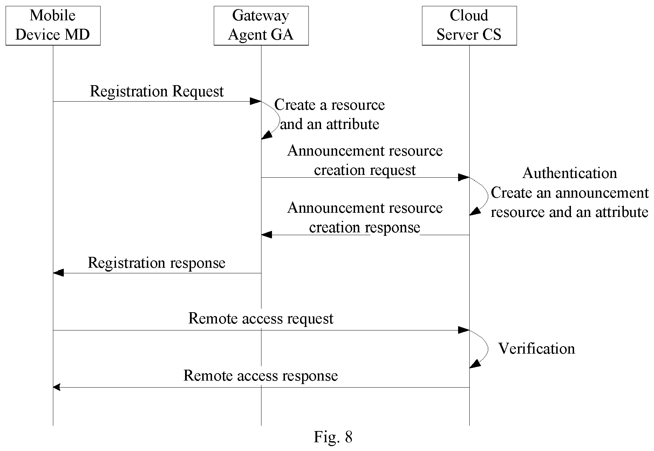

As shown in Fig. 8, a registration management method for an AllJoyn service, including the following steps.

In step S101, when it is necessary to locally control an Alljoyn device in a proximal network, a mobile device MD1 sends a registration request to a gateway agent GA, the registration request message containing a registration parameter, wherein the registration parameter includes: an application identity and a configuration file.

The application identity refers to an application identity of a control App in the mobile device MD1.

The configuration file may include: a security certificate, an identity or a uniform resource identifier URI of a cloud server CS contracted with the control App.

In step S102, after authenticating the application identity and security certificate of the control App, a gateway management App in the gateway agent GA creates a sub-resource "Rgt-MDl" with a type "registered" for the control App in the local resource "registered to" in the gateway agent GA, and creates an attribute of the registered resource "Rgt-MDl", the attribute of the registered resource including: an announcement URI, an initiator, and authentication.

The announcement URI refers to an entity to which the registered resource needs to be announced, and a value thereof is adapted to a URI of a cloud server CS needing to be announced.

The initiator refers to an identity of an application initiating the registration, and a value thereof is adapted to be the application identity of the control App.

The authentication contains authentication information of the application initiating the registration, for instance, a security certificate of the control App.

In step S103, the gateway management App triggers a connector App in the gateway agent GA to send an announcement resource creation request to the cloud server CS according to the identity or the URI of the cloud server CS, and requests the cloud server CS to create an announcement resource for the resource "Rgt-MDl".

In step S102, after receiving the request from the connector App, the cloud server CS authenticates the control App according to the authentication information in the request message, creates an announcement resource "Rgt-MDl_Annc" for the resource "Rgt-MDl" after the control App passes the authentication, and creates an attribute of the announcement resource "Rgt-MDl_Annc", the attribute of the announcement resource (Rgt-MDl_Annc) of the registration resource (Rgt-MDl) including: an initiator, a creator and authentication.

The initiator refers to the identity of the application initiating the registration, and a value thereof is adapted to be the application identity or the URI of the control App.

The creator refers to an identity of an application initiating the announcement resource creation, and a value thereof is adapted to be an application identity or a URI of the connector App.

The authentication contains an authentication result on the application initiating registration, i.e., indication of success or failure of authentication.

In step S105, the cloud server CS feeds back an announcement resource creation response to the connector APP, the announcement resource creation response message including a URI of the announcement resource "Rgt-MDl_Annc".

In step S106, after receiving the response from the cloud server CS, the connector App updates the attribute of the registration resource "Rgt-MDl", the updated attribute including a registration URI. The registration URI refers to the URI of the announcement resource (Rgt-MDl_Annc) created by the cloud server for the registration resource after the registration resource (Rgt-MDl) is announced to the cloud server.

When the control App logs off at the gateway agent GA, the connector App may delete the announcement resource according to the registration URI.

In step S107, the gateway agent GA sends a registration confirmation to the mobile device MD1, the confirmation message including the URI of the announcement resource "Rgt-MDl_Annc".

In step S108, when the Alljoyn device in proximal network needs to be remotely controlled after leaving the proximal network, the mobile device MD1 sends a remote access request to the cloud server CS, the request message including at least one of the following information:
1) an address, a value of which is adapted to be the application identity or the URI of the connector App;
2) a registration URI, a value of which is adapted to the URI of the announcement resource "Rgt-MD1_Annc"; and
3) a content, including a specific operation instruction for remote control.

In step S109, after receiving the request from the mobile device MD1, the cloud server CS retrieves the announcement resource "Rgt-MD1_Annc" according to the registration URI in the request message, and after retrieving the announcement resource "Rgt-MD1_Annc", inquiries an authentication attribute and a creator attribute of the announcement resource "Rgt-MDl_Annc", and determines whether the authentication attribute indicates success of authentication and whether the address information carried in the request message matches with the creator attribute of the announcement resource.

If the verification is passed, i.e., the authentication attribute of the announcement resource is that the authentication is successful and the application identity or the URI of the connector App carried in the request message is consistent with the creator attribute of the announcement resource, the cloud server CS forwards the request of the mobile device MD1 to the gateway agent GA, and after receiving a remote access response of the gateway agent GA, feeds back the remote access response to the mobile device MD1.

If the verification is failed, i.e., the authentication attribute of the announcement resource is that the authentication is failed or the application identity or the URI of the connector App carried in the request message is not consistent with the creator attribute of the announcement resource, the cloud server CS directly feeds back a remote access response to the mobile device MD1, indicating that the remote access request is failed and a cause of failure is "not registered".

Moreover, the embodiments of the present disclosure also provide a computer readable storage medium storing a computer-executable instruction which, when being executed by a processor, implements the above-mentioned method.

According to the registration management method and apparatus provided by the foregoing embodiments, the gateway agent announces the registration resource and the attribute of the registration resource to the remote server after creating the registration resource and the attribute of the registration resource for the user terminal; the remote server creates the announcement resource and the attribute of the announcement resource for the user terminal, and establishes a correlation relation between the registration resource and the announcement resource; after leaving the proximal network, the user terminal can remotely control the devices in the proximal network without registering with the remote server, thus saving the signaling overhead of registering with the remote server and improving the user experience.

It is to be understood by those having ordinary skills in the art that all or part of the steps mentioned above can be completed by related hardware instructed (such as a processor) by a program which can be stored in a computer readable storage medium, such as a read-only memory, a magnetic disk or an optical disc. Optionally, all or part of the steps of the foregoing embodiments can also be implemented by one or more integrated circuits. Accordingly, each module/unit in the above embodiments can be implemented in hardware, for example, through an integrated circuit to achieve corresponding functions thereof, or in the form of a software function module, for example, by the processor to execute program instructions stored in the memory to achieve corresponding functions thereof. The present application is not limited to a combination of hardware and software in any particular form.

It should be noted that the present application may also have various other embodiments, and those skilled in the art may make various corresponding changes and modifications according to the present application without departing from the spirit and essence of the present application, and all these corresponding changes and modifications should fall within the scope of protection of the claims appended to the present application.

### INDUSTRIAL APPLICABILITY

According to the technical solutions provided by the embodiments of the invention, the gateway agent announces the registration resource and the attribute of the registration resource to the remote server after creating the registration resource and the attribute of the registration resource for the user terminal; the remote server creates the announcement resource and the attribute of the announcement resource for the user terminal, and establishes a correlation relation between the registration resource and the announcement resource; after leaving the proximal network, the user terminal can remotely control the devices in the proximal network without registering with the remote server, thus saving the signaling overhead of registering with the remote server and improving the user experience.

## Claims

1. A registration management method, applied to a gateway agent, comprising:
after receiving a registration request sent by a user terminal, creating a registration resource for the user terminal, and establishing an attribute of the registration resource;
sending an announcement resource creation request message to a remote server, the announcement resource creation request message carrying information of the registration resource created for the user terminal; receiving an announcement resource creation response message sent by the remote server, and after acquiring information of an announcement resource created by the remote server for the user terminal from the announcement resource creation response message, updating the attribute of the registration resource according to the acquired information of the announcement resource; and
sending a registration response message to the user terminal, the registration response message carrying the information of the registration resource created for the user terminal.

2. The method according to claim 1, wherein:
the gateway agent is a gateway agent capable of providing an AllJoyn service to a user; and
the user terminal is a user terminal providing the AllJoyn service to the user through an AllJoyn control application (App).

3. The method according to claim 2, wherein:
the registration request sent by the user terminal carries at least one of following information: an application identity of the control App initiating the registration request, authentication information of the control App, and an identity or a uniform resource identifier (URI) of a remote server contracted with the control App.

4. The method according to claim 3, wherein:
the attribute of the registration resource created by the gateway agent for the user terminal comprises at least one of following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates the registration request in the user terminal.

5. The method according to claim 4, wherein:
the sending the announcement resource creation request message to the remote server comprises:
triggering, by a gateway management App, a connector App to send the announcement resource creation request message to the remote server needing to be announced according to the identity or the URI of the remote server;
wherein, the gateway agent comprises: the gateway management App and the connector App; and the information of the registration resource carried in the announcement resource creation request message sent by the gateway agent comprises: attribute information of the registration resource.

6. The method according to claim 4, wherein:
the updating the attribute of the registration resource according to the acquired information of the announcement resource comprises:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal comprises: attribute information of the registration resource.

7. A registration management method, applied to a remote server, comprising:
after receiving an announcement resource creation request message sent by a gateway agent, acquiring information of a registration resource created by the gateway agent for a user terminal from the announcement resource creation request message; and
authenticating the user terminal according to the acquired information of the registration resource, creating an announcement resource for the user terminal when the user terminal passes the authentication, establishing an attribute of the announcement resource, and sending an announcement resource creation response message to the gateway agent, the announcement resource creation response message carrying information of the announcement resource.

8. The method according to claim 7, wherein:
the gateway agent is a gateway agent capable of providing an AllJoyn service to a user, comprising a gateway management application (App) and a connector App; and
the user terminal is a user terminal providing the AllJoyn service to the user through an AllJoyn control application (App).

9. The method according to claim 8, wherein:
the acquired information of the registration resource created by the gateway agent for the user terminal from the announcement resource creation request message comprises: attribute information of the registration resource; and
the attribute information of the registration resource comprises at least one of following information: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates the registration request in the user terminal.

10. The method according to claim 9, wherein:
the authenticating the user terminal according to the acquired information of the registration resource comprises:
determining a control App that initiates the registration request in the user terminal according to the acquired information of the initiator attribute of the registration resource; and
authenticating the control App according to the acquired information of the authentication attribute of the registration resource.

11. The method according to 9, wherein:
the attribute of the announcement resource created by the remote server for the user terminal comprises at least one of following attributes: a registration initiator attribute, an announcement initiator attribute, and an authentication result attribute;
wherein, a value of the registration initiator attribute is adapted to be an application identity or a URI of a control App that initiates a registration request in the user terminal;
a value of the announcement initiator attribute is adapted to be an application identity or a URI of the connector App of the gateway agent; and
a value of the authentication result attribute is adapted to be an authentication result of the control App that initiates the registration request in the user terminal by the remote server, which is indication information indicating success or failure of the authentication.

12. The method according to 11, wherein:
the information of the announcement resource carried in the announcement resource creation response message comprises: attribute information of the announcement resource.

13. The method according to claim 12, further comprising:
after receiving a remote access request message sent by the user terminal, acquiring at least one of following information from the remote access request message: an application identity or a URI of the connector App of the gateway agent, a URI of the announcement resource, and an operation instruction for remote control; and
inquiring corresponding attribute information of the announcement resource locally according to the URI information of the announcement resource carried in the remote access request message, if the corresponding attribute information of the announcement resource is inquired, determining whether the value of the authentication result attribute of the announcement resource passes the authentication, if the value of the authentication result attribute passes the authentication, determining whether the application identity or the URI of the connector App carried in the remote access request message is consistent with the inquired value of the announcement initiator attribute of the announcement resource, if the two values are consistent, determining that a verification is passed, forwarding the remote access request message to the gateway agent, and after receiving a remote access response of the gateway agent, feeding back the remote access response to the user terminal; if the two values are not consistent, feeding back the remote access response to the user terminal to indicate that the remote access request is failed; and if the value of the authentication result attribute is that the authentication is not passed, feeding back the remote access response to the user terminal to indicate that the remote access request is failed and a cause of failure is "not registered".

14. A registration management method, applied to a user terminal, comprising:
sending a registration request to a gateway agent; and
after receiving a registration response message sent by the gateway agent, acquiring information of a registration resource created by the gateway agent for a user terminal from the registration response message.

15. The method according to 14, wherein:
the gateway agent is a gateway agent capable of providing an AllJoyn service to a user; and
the user terminal is a user terminal providing the AllJoyn service to the user through an AllJoyn control application (App).

16. The method according to 15, wherein:
the registration request sent by the user terminal carries at least one of following information: an application identity of a control App initiating the registration request, authentication information of the control App, and an identity or a uniform resource identifier (URI) of a remote server contracted with the control App.

17. The method according to 16, wherein:
the information of the registration resource carried in the registration response message sent by the gateway agent comprises: attribute information of the registration resource; and
the attribute information of the registration resource comprises at least one of following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

18. The method according to claim 16, further comprising:
sending a remote access request message to the remote server according to the acquired information of the announcement resource, the remote access request message carrying at least one of following information: an application identity or a URI of the connector App of the gateway agent, a URI of the announcement resource, and an operation instruction for remote control.

19. A registration management apparatus, applied to a gateway agent, comprising:
a registration request receiving and processing module configured to, after receiving a registration request sent by a user terminal, create a registration resource for the user terminal, and establish an attribute of the registration resource;
an announcement requesting and processing module configured to send an announcement resource creation request message to a remote server, the announcement resource creation request message carrying information of the registration resource created for the user terminal; receive an announcement resource creation response message sent by the remote server, and after acquiring information of an announcement resource created by the remote server for the user terminal from the announcement resource creation response message, update the attribute of the registration resource according to the acquired information of the announcement resource; and
a registration response module configured to send a registration response message to the user terminal, the registration response message carrying the information of the registration resource created for the user terminal.

20. The apparatus according to claim 19, wherein:
the gateway agent is a gateway agent capable of providing an AllJoyn service to a user; and
the user terminal is a user terminal providing the AllJoyn service to the user through an AllJoyn control application (App).

21. The apparatus according to claim 20, wherein:
the registration request sent by the user terminal carries at least one of following information: an application identity of a control App initiating the registration request, authentication information of the control App, and an identity or a uniform resource identifier (URI) of a remote server contracted with the control App.

22. The apparatus according to claim 21, wherein:
an attribute of the registration resource created by the gateway agent for the user terminal comprises at least one of following attributes: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates a registration request in the user terminal.

23. The apparatus according to claim 22, wherein:
the announcement requesting and processing module is configured to send the announcement resource creation request message to the remote server through a following manner:
triggering, by a gateway management App, a connector App to send the announcement resource creation request message to the remote server according to the identity or the URI of the remote server needing to be announced;
wherein, the gateway agent comprises: the gateway management App and the connector App; and the information of the registration resource carried in the announcement resource creation request message sent by the gateway agent comprises: attribute information of the registration resource.

24. The apparatus according to claim 22, wherein:
the announcement requesting and processing module is configured to update the attribute of the registration resource according to the acquired information of the announcement resource through a following manner:
adding an attribute of the announcement resource in the attribute of the registration resource, a value of the attribute of the announcement resource being adapted to be a URI of the announcement resource created by the remote server for the user terminal;
wherein, the information of the registration resource carried in the registration response message sent by the gateway agent to the user terminal comprises: attribute information of the registration resource.

25. A registration management apparatus, applied to a remote server, comprising:
an announcement request receiving module configured to, after receiving an announcement resource creation request message sent by a gateway agent, acquire information of a registration resource created by the gateway agent for a user terminal from the announcement resource creation request message; and
an announcement resource creating module configured to authenticate the user terminal according to the acquired information of the registration resource, create an announcement resource for the user terminal when the user terminal passes the authentication, establish an attribute of the announcement resource, and send an announcement resource creation response message to the gateway agent, the announcement resource creation response message carrying information of the announcement resource.

26. The apparatus according to claim 25, wherein:
the gateway agent is a gateway agent capable of providing an AllJoyn service to a user, comprising a gateway management application (App) and a connector App; and
the user terminal is a user terminal providing the AllJoyn service to the user through an AllJoyn control application (App).

27. The apparatus according to claim 26, wherein:
the acquired information of the registration resource created by the gateway agent for the user terminal from the announcement resource creation request message comprises: attribute information of the registration resource; and
the attribute information of the registration resource comprises at least one of following information: an announcement URI attribute, an initiator attribute, and an authentication attribute;
wherein, a value of the announcement URI attribute is adapted to be a URI of a remote server needing to be announced;
a value of the initiator attribute is adapted to be an application identity or a URI of a control App that initiates a registration request in the user terminal; and
a value of the authentication attribute is adapted to be authentication information of the control App that initiates the registration request in the user terminal.

28. The apparatus according to claim 27, wherein:
the announcement resource creating module is configured to authenticate the user terminal according to the acquired information of the registration resource through a following manner:
determining a control App that initiates the registration request in the user terminal according to the acquired information of the initiator attribute of the registration resource; and
authenticating the control App according to the acquired information of the authentication attribute of the registration resource.

29. The apparatus according to claim 27, wherein:
the attribute of the announcement resource created by the remote server for the user terminal comprises at least one of following attributes: a registration initiator attribute, an announcement initiator attribute, and an authentication result attribute;
wherein, a value of the registration initiator attribute is adapted to be an application identity or a URI of a control App that initiates a registration request in the user terminal; and
a value of the announcement initiator attribute is adapted to be an application identity or a URI of the connector App of the gateway agent; and
a value of the authentication result attribute is adapted to be an authentication result of the control App that initiates the registration request in the user terminal by the remote server, which is indication information indicating success or failure of authentication.

30. The apparatus according to claim 29, wherein:
the information of the announcement resource carried in the announcement resource creation response message comprises: attribute information of the announcement resource.

31. The apparatus according to claim 30, further comprising:
a remote service module configured to, after receiving a remote access request message sent by the user terminal, acquire at least one of following information from the remote access request message: an application identity or a URI of the connector App of the gateway agent, a URI of the announcement resource, and an operation instruction for remote control;
inquire the corresponding attribute information of the announcement resource locally according to the URI information of the announcement resource carried in the remote access request message, if the corresponding attribute information of the announcement resource is inquired, determine whether a value of the authentication result attribute of the announcement resource passes the authentication, if the value of the authentication result attribute passes the authentication, determine whether the application identity or the URI of the connector App carried in the remote access request message is consistent with a value of the inquired announcement initiator attribute of the announcement resource, if the two values are consistent, determine that a verification is passed, forward the remote access request message to the gateway agent, and after receiving a remote access response of the gateway agent, feed back the remote access response to the user terminal; if the two values are not consistent, feed back the remote access response to the user terminal to indicate that the remote access request is failed; and if the value of the authentication result attribute is that the authentication is not passed, feed back the remote access response to the user terminal to indicate that the remote access request is failed and a cause of failure is "not registered".

32. A registration management apparatus, applied to a user terminal, comprising:
a registration request module configured to send a registration request to a gateway agent; and
a registration response receiving module configured to, after receiving the registration response message sent by the gateway agent, acquire information of a registration resource created by the gateway agent for a user terminal from the registration response message.

33. The apparatus according to claim 32, wherein:
the gateway agent is a gateway agent capable of providing an AllJoyn service to a user; and
the user terminal is a user terminal providing the AllJoyn service to the user through an AllJoyn control application (App).

34. The apparatus according to claim 33, wherein:
the registration request sent by the user terminal carries at least one of following information: an application identity of a control App initiating the registration request, authentication information of the control App, and an identity or a uniform resource identifier (URI) of a remote server contracted with the control App.

35. The apparatus according to claim 34, wherein
the information of the registration resource carried in the registration response message sent by the gateway agent comprises: attribute information of the registration resource; and
the attribute information of the registration resource comprises at least one of following information: an announcement URI attribute, an initiator attribute, an authentication attribute, and an attribute of an announcement resource;
wherein, a value of the announcement URI attribute is adapted to be a URI of a remote server needing to be announced;
a value of the initiator attribute is adapted to be an application identity or a URI of a control App that initiates a registration request in the user terminal;
a value of the authentication attribute is adapted to be authentication information of the control App that initiates a registration request in the user terminal; and
a value of the attribute of the announcement resource is adapted to the URI of the announcement resource created by the remote server for the user terminal.

36. The apparatus according to claim 34, further comprising:
a remote access module adapted to send a remote access request message to the remote server according to the acquired information of the announcement resource, the remote access request message carrying at least one of following information: an application identity or a URI of the connector App of the gateway agent, a URI of the announcement resource, and an operation instruction for remote control.
